# EUROPÄISCHE PATENTANMELDUNG

(11) **EP 2 348 259 A2**
(43) Veröffentlichungstag der Anmeldung: **27.07.2011**
(21) Anmeldenummer: 10014776.8
(22) Anmeldetag: 19.11.2010
(51) Int. Cl.: F24F 11/04

(54) **Verfahren und Vorrichtung zur Belüftung und / oder Klimatisierung eines Raumes**

(30) Priorität: 18.12.2009 DE 102009060482
(71) Anmelder: LTG Aktiengesellschaft, 70435 Stuttgart (DE)
(72) Erfinder: Schaal, Gerd, Dr.-Ing., 70567 Stuttgart (DE)
(74) Vertreter: Grosse, Rainer

(57) **Zusammenfassung**

Die Erfindung betrifft ein Verfahren zur Belüftung und/oder Klimatisierung eines Raumes, insbesondere eines Gebäudes, bei dem mit einem einzigen Ventilator ein Volumenstrom erzeugt und in den Raum eingebracht wird. Es ist vorgesehen, dass der Ventilator derart betrieben wird und/oder dass ein einziges, dem Ventilator strömungstechnisch vor- oder nachgeschaltetes Querschnittsstellmittel derart betrieben wird, dass in den Raum permanent ein in der Größe konstanter Grundvolumenstrom und zueinander zeitbeabstandete, dem Grundvolumenstrom überlagerte Volumenstrompulse (V_{I}) eines Pulsvolumenstroms eingebracht werden und/oder dass unter Zuhilfenahme mindestens eines Wärmetauschers in den Raum Luft mit pulsend wechselnder Temperatur eingebracht wird.

## Beschreibung

Die Erfindung betrifft ein Verfahren zur Belüftung und/oder Klimatisierung eines Raumes, insbesondere eines Gebäudes, bei dem mit einem einzigen Ventilator ein Volumenstrom erzeugt und in den Raum eingebracht wird.

Es ist bekannt, einen Raum eines Gebäudes oder dergleichen mit einem Ventilator zu lüften. Sofern sich im Ventilatorluftstrom ein Wärmetauscher befindet, kann auch eine Klimatisierung des Raumes erfolgen.

Die bekannten Verfahren der Belüftung und/oder Klimatisierung bringen zwar eine Verbesserung des Raumklimas mit sich, die jedoch noch nicht hinreichend ist.

Der Erfindung liegt daher die Aufgabe zugrunde, ein Verfahren der eingangs genannten Art anzugeben, das zu einem besonders guten Raumklima führt, sei es im Zuge einer Belüftung und/oder Klimatisierung.

Diese Aufgabe wird erfindungsgemäß dadurch gelöst, dass der Ventilator derart betrieben wird und/oder das ein einziges, dem Ventilator strömungstechnisch vor- oder nachgeschaltetes Querschnittsstellmittel derart betrieben wird,
- dass in den Raum permanent ein in der Größe konstanter Grundvolumenstrom und zueinander zeitbeabstandete, den Grundvolumenstrom überlagerte Volumenstrompulse eines Pulsvolumenstroms eingebracht werden und/oder
- dass unter Zuhilfenahme mindestens eines Wärmetauschers in den Raum Luft mit pulsierend wechselnder Temperatur eingebracht wird.

Die Erfindung geht demgemäß von der Verwendung nur eines einzigen Ventilators und nur eines einzigen Querschnittsstellmittels aus. Der Ventilator wird in Bezug auf seine Luftförderung derart betrieben, dass er andauernd den in der Größe konstanten Grundvolumenstrom einbringt und durch zeitweise erfolgendes Steigern der Förderleistung und anschließendem Wiederabsenken der Förderleistung Volumenstrompulse erzeugt, die dem Grundvolumenstrom überlagert sind. Der Grundvolumenstrom und die Volumenstrompulse addieren sich in ihrer Wirkung. Insgesamt wird ein Gesamtvolumenstrom verwendet. Alternativ oder zusätzlich ist vorgesehen, dass das dem Ventilator strömungstechnisch nachgeschaltete Querschnittsstellmittel in Bezug auf einen Strömungsquerschnitt derart verstellt wird, dass der vom Ventilator erzeugte Volumenstrom permanent eine Größe beibehält, die zum andauernden, in der Größe konstanten Grundvolumenstrom führt, wobei durch zeitweise erfolgendes Verstellen des Volumenstromstellmittels diesem Grundvolumenstrom Volumenstrompulse überlagert werden. Bei der mit Volumenstromstellmittel versehenen Möglichkeit wird der Ventilator vorzugsweise konstant betrieben, dass heißt er erzeugt einen zeitlich in der Größe gleichbleibenden, kontinuierlichen Volumenstrom.

Die beiden vorstehend erwähnten Möglichkeiten können jeweils mit mindestens einem Wärmetauscher kombiniert werden, dass heißt, der vom Ventilator angesaugte und/oder gelieferte Volumenstrom durchsetzt diesen Wärmetauscher, um - zur Erreichung einer Klimatisierung - temperaturbehandelt zu werden. Liegt kein Wärmetauscher vor, so erfolgt lediglich eine Belüftung des Raumes. Sofern die vom Ventilator angesaugte Luft in ihrer Temperatur vorbehandelt ist, ist auch im letztgenannten Fall eine Klimatisierung vorhanden.

Durch den Grundvolumenstrom wird eine Grundlüftung/Grundklimatisierung des Raumes geschaffen. Die überlagerten Volumenstrompulse des Pulsvolumenstroms sorgen für eine intensive Mischung der Raumluft mit der eingebrachten Luft. Es tritt demzufolge eine hohe Induktion auf, die zu einer sehr effektiven Belüftung beziehungsweise Klimatisierung führt und stets ein angenehmes Raumklima schafft.

Unabhängig davon, ob der vorstehend erwähnte Wärmetauscher eingesetzt wird oder nicht, ist alternativ oder zusätzlich vorgesehen, dass unter Zuhilfenahme mindestens eines Wärmetauschers in den Raum Luft mit pulsend wechselnder Temperatur eingebracht wird. Bei dieser Luft kann es sich um den Grundvolumenstrom mit überlagertem Pulsvolumenstrom handeln oder aber um einen Konstantvolumenstrom. Im ersten Fall dient der Ventilator dazu, den Grundvolumenstrom mit überlagertem Pulsvolumenstrom zu schaffen. Das Querschnittsverstellmittel liefert in Zusammenarbeit mit dem in diesem Absatz erwähnten Wärmetauscher die Temperaturpulsung. Für den zweiten Fall eines Konstantvolumenstroms wird der Ventilator nicht mit wechselnder Drehzahl, sondern mit konstanter Drehzahl gefahren, so dass der Konstantvolumenstrom erzeugt wird. Das Querschnittsverstellmittel bewirkt in Zusammenarbeit mit dem Wärmetauscher die Temperaturpulsung. Aufgrund der in der Temperatur gepulsten Luft wird eine intensive Mischung mit der Raumluft geschaffen. Erfolgt dies - bei mindestens einem der möglichen Ausführungsbeispiele - zusätzlich zu der Volumenstrompulsung (Grundvolumenstrom mit überlagertem Pulsvolumenstrom), so wird eine besonders intensive Mischung mit der Raumluft erzielt, wodurch ein besonders angenehmes Raumklima geschaffen wird.

Nach einer Weiterbildung der Erfindung ist vorgesehen, dass der Ventilator zur Erzeugung des Grundvolumenstroms mit einer konstanten Grunddrehzahl betrieben wird, die zur Überlagerung des Grundvolumenstroms mit den Volumenstrompulsen jeweils auf eine Impulsdrehzahl angehoben und wieder auf die Grunddrehzahl abgesenkt wird. Das Anheben auf die Impulsdrehzahl erzeugt ein Ansteigen des in den Raum eingebrachten Volumenstroms; das Absenken auf die Grunddrehzahl führt den in den Raum eingebrachten Volumenstrom auf den Grundvolumenstrom zurück. Durch ständiges Anheben und Absenken der Drehzahl wird demzufolge der Grundvolumenstrom mit überlagertem Pulsvolumenstrom geschaffen.

Vorzugsweise kann vorgesehen sein, dass der Ventilator mit einer konstanten Betriebsdrehzahl betrieben wird und dass das ein Volumenstromstellmittel bildende Querschnittsstellmittel durch Querschnittsverstellung derart zeitlich verstellt wird, dass sich stromabwärts des Volumenstromstellmittels der Grundvolumenstrom mit den überlagerten Volumenstrompulsen des Pulsvolumenstroms ergibt. Der Ventilator arbeitet daher mit konstanter Drehzahl, nämlich der erwähnten Betriebsdrehzahl, die in ihrer Größe vorgegeben sein kann. Hierdurch wird ein Volumenstrom erzeugt, der vom Volumenstromstellmittel- je nach Querschnittseinstellung - in seiner Größe beeinflusst wird, dass heißt, stromabwärts des Volumenstromstellmittels ergibt sich der Grundvolumenstrom, der vorliegt, wenn dass Volumenstromstellmittel eine entsprechende Öffnungsstellung aufweist. Wird es aus dieser Öffnungsstellung zeitweise in eine größere Öffnungsstellung verstellt und dann wieder zurückgestellt, so ergeben sich jeweils Volumenstrompulse, die dem Grundvolumenstrom überlagert sind.

Es ist vorteilhaft, wenn als Volumenstromstellmittel eine Luftklappe verwendet wird, die für die Abgabe des Grundvolumenstroms in eine Teiloffenstellung verschwenkt wird, und für die Abgabe des Grundvolumenstroms mit überlagertem Volumenstrompuls in eine größere Offenstellung als die Teiloffenstellung, insbesondere in eine Volloffenstellung, verschwenkt wird. Die Luftklappe führt daher mit einfachen Mitteln zum erfindungsgemäßen Belüftungs- beziehungsweise Klimatisierungsverfahren.

Eine Weiterbildung der Erfindung sieht vor, dass ein sich aus Grundvolumenstrom und Pulsvolumenstrom zusammensetzender Gesamtvolumenstrom oder ein vom Ventilator erzeugter Konstantvolumenstrom mit pulsend wechselnder Temperatur versehen wird. Demzufolge wird Luft in den Raum eingebracht, die eine wechselnde Lufttemperatur aufweist. Entweder wird der im Volumen gepulste Gesamtvolumenstrom oder der Konstantvolumenstrom in der Temperatur gepulst. In jedem Fall wird durch diese Temperaturveränderung Luft in den Raum eingebracht, die in der Volumenstrommenge pulsiert oder konstant ist und im Hinblick auf die Temperatur pulst, wodurch ein sehr guter thermischer Austausch mit der Raumluft und demzufolge ein besonders gutes Raumklima geschaffen wird.

Das Wechseln der Lufttemperatur kann periodisch erfolgen. Alternativ ist es selbstverständlich auch möglich, dass kein periodischer Lufttemperaturwechsel erfolgt.

Eine Weiterbildung der Erfindung sieht vor, dass zumindest ein Anteil des Gesamtvolumenstroms oder zumindest ein Anteil des Konstantvolumenstroms zeitweise über und zeitweise nicht über eine vom Wärmetauscher gebildete Wärmequelle oder eine Kältequelle geleitet wird. Durch das Leiten der Luft über die Wärmequelle oder die Kältequelle erfolgt eine entsprechende Temperaturbehandlung, die zum genannten Wechsel der Lufttemperatur führt.

Als Wärmequelle oder Kältequelle wird der vorzugsweise mindestens eine Wärmetauscher verwendet. Dieser wird beispielsweise mittels kaltem oder warmem Wasser betrieben, so dass die über ihn streichende Luft eine entsprechende Temperatur annimmt.

Nach einer Weiterbildung der Erfindung ist vorgesehen, dass als Querschnittsverstellmittel ein in einem den Wärmetauscher aufweisenden Teilquerschnitt liegende Schwenkklappe verwendet wird, die für die Erzeugung der Luft mit pulsend wechselnder Temperatur ständig wechselnd geöffnet und geschlossen wird. Ein Anteil der vom Ventilator geförderten Luft durchsetzt daher den erwähnten Teilquerschnitt, in dem sich der Wärmetauscher befindet. Der Teilquerschnitt wird mittels der Schwenkklappe ständig wechselnd geöffnet und geschlossen, wodurch - in Abhängigkeit der Stellung der Schwenkklappe - ein Teilvolumenstrom wärme- oder kältebehandelt wird. Ist die Schwenkklappe geschlossen, so führt der Teilquerschnitt, der den Wärmetauscher aufweist, keine Luft, sondern die gesamte Luft wird über einen anderen Teilquerschnitt geführt, in dem sich jedoch keine Temperaturbehandlungsquelle befindet. Insgesamt lässt sich daher durch das vorzugsweise als Schwenkklappe ausgebildete Querschnittsverstellmittel eine Temperaturpulsung der in den Raum gelangenden Luft erzielen.

Es ist vorteilhaft, wenn die Frequenz der durch die Volumenstrompulse bewirkten Volumenstromänderung und die Frequenz des Lufttemperaturwechsels unterschiedlich oder gleich und/oder synchron oder asynchron sind. Die beiden genannten Frequenzen können somit gleich sein oder voneinander abweichen, wobei sie einen synchronen oder asynchronen Wechsel mit sich bringen können.

Schließlich betrifft die Erfindung eine Vorrichtung zur Belüftung und/oder Klimatisierung eines Raumes, insbesondere eines Gebäudes, vorzugsweise zur Durchführung des vorstehend genannten Verfahrens, mit einem einzigen Ventilator zur Erzeugung eines in den Raum einzubringenden Volumenstroms, wobei die Vorrichtung gekennzeichnet ist durch eine Drehzahlstell- oder Drehzahlregeleinrichtung des Ventilators und/oder ein einziges, dem Ventilator strömungstechnisch vor- oder nachgeschaltetes Querschnittsstellmittel zum Erzeugen eines permanenten, in der Größe konstanten Grundvolumenstroms mit zeitbeabstandet überlagerten Volumenstrompulsen eines Pulsvolumenstroms und/oder unter Zuhilfenahme mindestens eines Wärmetauschers zum Einbringen von Luft mit pulsend wechselnder Temperatur.

Die Zeichnungen veranschaulichen die Erfindung anhand von Ausführungsbeispielen und zwar zeigt:
- Figur 1: eine schematische Ansicht einer Belüftungsmöglichkeit eines Raumes eines Gebäudes,
- Figur 2: ein Diagramm zum Betrieb der Anordnung der Figur 1,
- Figur 3: eine weitere Ausgestaltung einer Belüftungsmöglichkeit,

- Figur 4, 5: Diagramme zur Betriebsweise der Einrichtung gemäß Figur 3,
- Figur 6: eine Einrichtung zur zusätzlichen Temperaturbehandlung und
- Figur 7, 8: Diagramme zur Betriebsweise der Anordnung gemäß Figur 6.

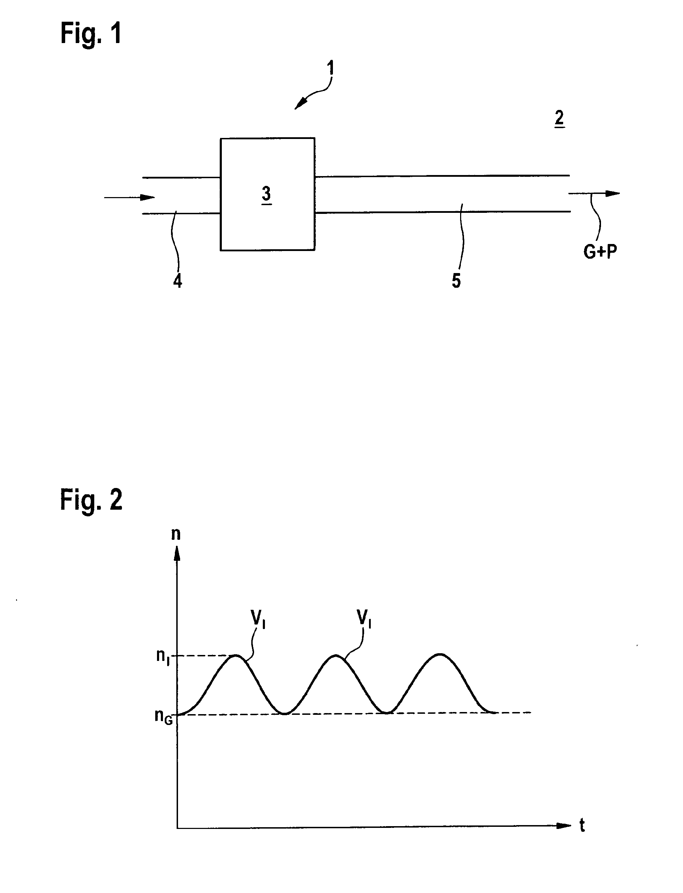

Die Figur 1 zeigt eine Vorrichtung 1 eines Raumes 2 eines Gebäudes. Die Vorrichtung weist einen einzigen Ventilator 3 auf, der einen elektromotorischen Antrieb besitzt. In Betrieb saugt der Ventilator 3 über einen Ansaugweg 4 Luft, beispielsweise Primärluft, an und bringt diese Luft über einen Luftkanal 5 in den Raum 2 ein. Der erwähnte elektromotorische Antrieb des Ventilators 3 wird derart angesteuert, dass er eine Grunddrehzahl n_{G} aufweist, die vorzugsweise periodisch angehoben und wieder abgesenkt wird. Dies kann beispielsweise gemäß der aus der Figur 2 hervorgehenden Kennlinie erfolgen, vorzugsweise sinusartig. Die Anhebung erfolgt bis auf eine Impulsdrehzahl n_{I}. Anschließend fällt die Drehzahl wieder auf die Grunddrehzahl n_{G} zurück. Diese Vorgänge wiederholen sich ständig, vorzugsweise periodisch. Insgesamt führt das zu einem in den Raum 2 eintretenden Grundvolumenstrom G, der permanent ist und in seiner Größe konstant ist, und dem - durch das Anheben und Absenken der Drehzahl - Volumenstrompulse V_{I} eines Pulsvolumenstroms P überlagert sind.

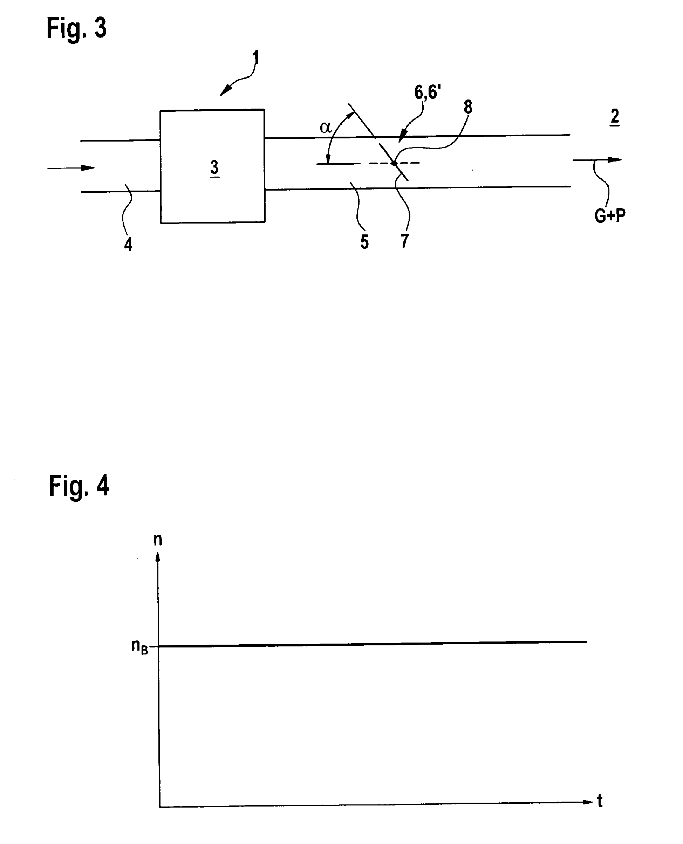

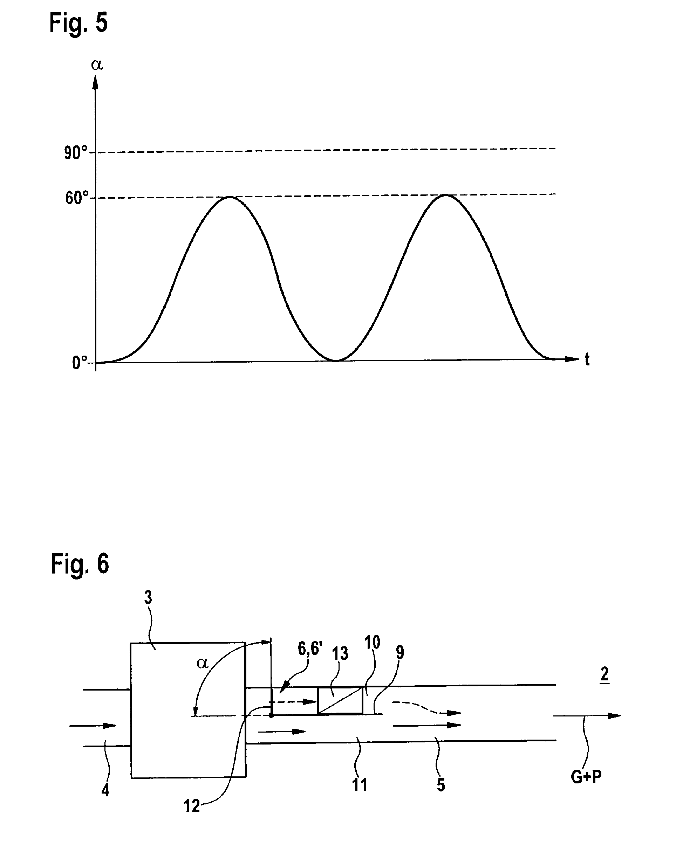

Die Figur 3 verdeutlicht ein zusätzliches oder alternatives Vorgehen. Auch hier ist eine Vorrichtung 1 vorhanden, die einen einzigen Ventilator 3 aufweist, der in Betrieb über einen Ansaugweg 4 Luft, insbesondere Primärluft ansaugt und über einen Luftkanal 5 in einen Raum 2 eines Gebäudes oder dergleichen einbringt. Die Anordnung ist allerdings so getroffen, dass der elektrische Antrieb des Ventilators 3 mit konstanter Betriebsdrehzahl n_{B} gemäß Figur 4 betrieben wird. In dem Ansaugweg 4 oder - wie aus der Figur 3 ersichtlich - im Luftkanal 5 befindet sich ein als Volumenstromstellmittel 6' ausgebildetes Querschnittsstellmittel 6, das in Form einer Luftklappe 7 realisiert sein kann, die um eine Achse 8 in die beiden aus der Figur 3 ersichtlichen Stellungen verschwenkt werden kann. Dies erfolgt mittels eines nicht dargestellten Antriebs. Die mit durchgezogener Linie dargestellte Stellung der Luftklappe 7 entspricht einer Teiloffenstellung; die mit gepunkteter Linie dargestellte Stellung einer größeren Offenstellung, nämlich einer Volloffenstellung. Wird nun die Luftklappe 7 laufend zwischen den beiden genannten Stellungen, die den Winkel α einschließen, verschwenkt, so wird der Querschnitt des Luftkanals 5 entsprechend zeitlich verstellt, so dass in der Teiloffenstellung der Raum 2 einen Grundvolumenstrom G konstanter Größe erhält, der - durch die Volloffenstellungen - überlagert ist von Volumenstrompulsen V_{I}, dass heißt, in den Raum gelangt der Grundvolumenstrom G überlagert vom Pulsvolumenstrom P. Die Figur 5 verdeutlicht das Verschwenken der Luftklappe 7 um den Winkel α zwischen dem Wert 0° (Volloffenstellung) und dem Winkel 60° (Teiloffenstellung). Selbstverständlich können auch andere Winkelwerte angenommen werden, die zu einem entsprechenden Ergebnis führen.

Sowohl beim Ausführungsbeispiel der Figur 1 als auch beim Ausführungsbeispiel der Figur 3 kann sich im Ansaugweg 4 und/oder im Ventilator 3 und/oder im Luftkanal 5 ein Wärmetauscher befinden, um in der Temperatur beeinflusste Luft in den Raum 2 einbringen zu können.

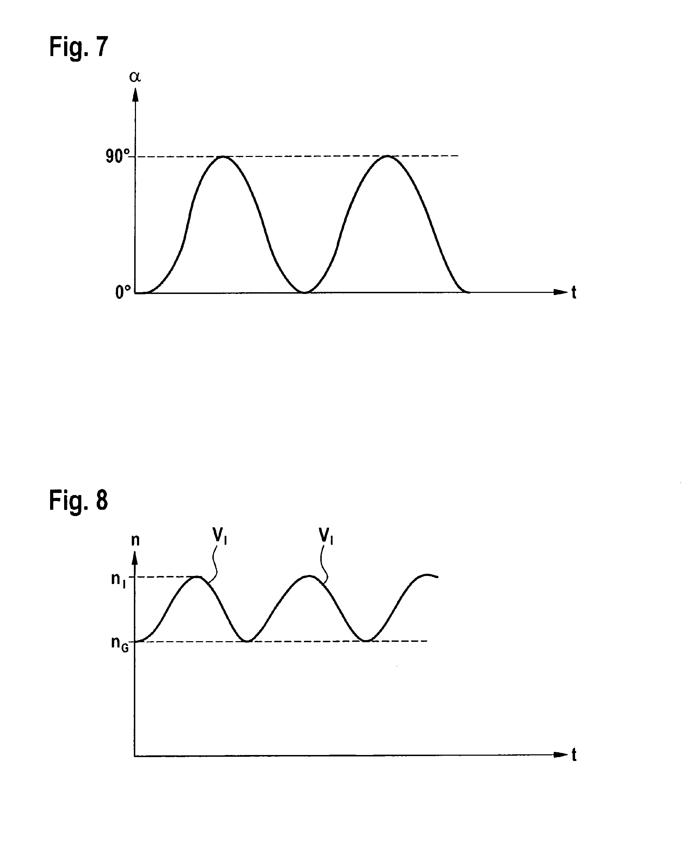

Das Ausführungsbeispiel der Figur 6 betrifft eine Anordnung, die dem Ausführungsbeispiel der Figur 1 entspricht, dass heißt, dort liegt eine Vorrichtung 1 mit einem Ventilator 3 vor, der mit konstanter Grunddrehzahl n_{G} betrieben wird, um einen Grundvolumenstrom G zu erzeugen, wobei zur Überlagerung des Grundvolumenstroms G mit Volumenstrompulsen V_{I} jeweils die Grunddrehzahl n_{G} auf die Impulsdrehzahl n_{I} angehoben und dann wieder auf die Grunddrehzahl n_{G} abgesenkt wird. Zusätzlich ist jedoch vorgesehen, dass sich im Luftkanal 5 - zumindest abschnittsweise - eine Längstrennwand 9 befindet, wodurch der Querschnitt des Luftkanals 5 in Teilquerschnitte 10 und 11 unterteilt ist. Der Teilquerschnitt 10 lässt sich mittels einer Schwenkklappe 12 verschließen (mit durchgezogener Linie dargestellte Stellung) beziehungsweise öffnen (mit gestrichelter Linie dargestellte Stellung). Die Schwenkklappe 12 durchläuft hierbei einen Winkel α von 90°, so wie dies aus der Figur 7 ersichtlich ist. Ferner befindet sich im Teilquerschnitt 10 ein Wärmetauscher 13, der vorzugsweise mittels gekühltem Wasser oder Warmwasser betrieben werden kann, um einen durchsetzenden Luftstrom zu kühlen oder zu erwärmen.

Wird nun im Betrieb der Ventilator 3 mit seiner Grunddrehzahl n_{G} und zeitweisem Anheben bis auf eine Impulsdrehzahl n_{I} und dann wieder mit Grunddrehzahl n_{G} gemäß Figur 8 betrieben und gleichzeitig die Schwenkklappe 12 hin und her geschwenkt, so wie dies aus der Figur 7 hervorgeht, so ergibt sich ein in den Raum gelangender Luftstrom, der sich aus dem Grundvolumenstrom G und dem Pulsvolumenstrom P zusammensetzt und darüber hinaus eine wechselnde Lufttemperatur aufweist, da von Zeit zu Zeit der unabhängig von der Stellung der Schwenkklappe 12 den Teilquerschnitt 11 durchsetzenden, nicht temperaturbehandelten Luft klappenstellungsabhängig strömende Luft, die den Wärmetauscher 13 passiert, zugemischt wird. Ein temperaturbehandelter Teilluftstrom im Teilquerschnitt 10 ist in der Figur 6 mit gestrichelter Linie dargestellt, der dem in der Temperatur unbehandelten Teilluftstrom des Teilquerschnitts 11 überlagert wird. In den Raum 2 tritt insofern im Volumenstrom gepulste und ebenfalls in der Temperatur gepulste Luft ein.

Bei einem weiteren, nicht näher dargestellten Ausführungsbeispiel, das der Figur 6 entspricht, sodass auf diese und auf die zugehörige Beschreibung verwiesen werden kann, ist vorgesehen, dass die Schwenkklappe 12 nicht einen Winkel von 90°, sondern von 180° durchläuft, derart, dass sie bis in den Teilquerschnitt 11 gelangt und zwischen den Werten 0° und 180° permanent hin- und hergeschaltet wird, mit der Folge, dass ein mal der Teilquerschnitt 10 geöffnet und gleichzeitig der Teilquerschnitt 11 geschlossen und - in der anderen Endstellung der Schwenkklappe 12 - der Teilquerschnitt 11 geschlossen und der Teilquerschnitt 10 geöffnet ist. Die Folge ist, dass die Luft in der einen Klappenstellung den Teilquerschnitt 11 durchströmt, der keinen Wärmetauscher aufweist, und in der anderen Stellung der Klappe den Teilquerschnitt 10 und damit auch den Wärmetauscher 13 durchströmt. Diese Ausführung hat gegenüber der vorstehend erwähnten, in der Figur 6 gezeigten Ausführung den Vorteil, dass so gut wie keine Strömungswiderstandsunterschiede bei den unterschiedlichen Klappenendstellungen vorliegen (bis auf den Strömungswiderstand des Wärmetauschers 13, der jedoch beispielsweise durch eine entsprechende Querschnittsverjüngung im Teilquerschnitt 11 kompensiert werden könnte).

Bei einem nicht dargestellten, weiteren Ausführungsbeispiel, das entsprechend der Ausführung der Figur 6 aufgebaut ist, so dass auf diese Figur und die dazu gehörige Beschreibung verwiesen wird, ist vorgesehen, dass der Ventilator 3 nicht mit konstanter Grunddrehzahl und in zeitlichen Abständen auf Impulsdrehzahl angehobene Drehzahl betrieben wird, sondern mit einer Konstantdrehzahl. Dies hat zur Folge, dass die in den Raum 2 gelangende Luft einen konstanten Volumenstrom hat. Dieser ist jedoch temperaturgepulst, was mittels der Schwenkklappe 12 und dem im Teilquerschnitt 10 angeordneten Wärmetauscher 13 hervorgerufen wird. Demzufolge liegen bei diesem Ausführungsbeispiel keine Volumenstrompulse, sondern nur Temperaturpulse vor. Die vorstehende Ausführungsform kann sowohl mit einer Schwenkklappe realisiert sein, die einen Winkel von 90° durchläuft oder mit einer Schwenkklappe 12, die einen Winkel von 180° durchläuft.

## Patentansprüche

1. Verfahren zur Belüftung und/oder Klimatisierung eines Raumes, insbesondere eines Gebäudes, bei dem mit einem einzigen Ventilator ein Volumenstrom erzeugt und in den Raum eingebracht wird, **dadurch gekennzeichnet, dass** der Ventilator (3) derart betrieben wird und/oder dass ein einziges, dem Ventilator (3) strömungstechnisch vor- oder nachgeschaltetes Querschnittsstellmittel (6) derart betrieben wird,
- dass in den Raum (2) permanent ein in der Größe konstanter Grundvolumenstrom (G) und zueinander zeitbeabstandete, dem Grundvolumenstrom (G) überlagerte Volumenstrompulse (V_{I}) eines Pulsvolumenstroms (P) eingebracht werden und/oder
- dass unter Zuhilfenahme mindestens eines Wärmetauschers (13) in den Raum (2) Luft mit pulsend wechselnder Temperatur eingebracht wird.

2. Verfahren nach Anspruch 1, **dadurch gekennzeichnet, dass** der Ventilator (3) zur Erzeugung des Grundvolumenstroms (G) mit einer konstanten Grunddrehzahl (n_{G}) betrieben wird, die zur Überlagerung des Grundvolumenstroms (G) mit den Volumenstrompulsen (V_{I}) jeweils auf eine Impulsdrehzahl (n_{I}) angehoben und wieder auf die Grunddrehzahl (n_{G}) abgesenkt wird.

3. Verfahren nach einem der vorhergehenden Ansprüche, **dadurch gekennzeichnet, dass** der Ventilator (3) mit einer konstanten Betriebsdrehzahl (n_{B}) betrieben wird und dass das ein Volumenstromstellmittel (6') bildende Querschnittsstellmittel (6) durch Querschnittsverstellung derart zeitlich verstellt wird, dass sich stromabwärts des Volumenstromstellmittels (6') der Grundvolumenstrom (G) mit den überlagerten Volumenstrompulsen (V_{I}) des Pulsvolumenstroms (P) ergibt.

4. Verfahren nach einem der vorhergehenden Ansprüche, **dadurch gekennzeichnet, dass** als Volumenstromstellmittel (6') eine Luftklappe (7) verwendet wird, die für die Abgabe des Grundvolumenstroms (G) in eine Teiloffenstellung verschwenkt wird, und für die Abgabe des Grundvolumenstroms (G) mit überlagertem Volumenstrompuls (V_{I}) in eine größere Offenstellung als die Teiloffenstellung, insbesondere eine Volloffenstellung, verschwenkt wird.

5. Verfahren nach einem der vorhergehenden Ansprüche, **dadurch gekennzeichnet, dass** ein sich aus Grundvolumenstrom (G) und Pulsvolumenstrom (P) zusammensetzender Gesamtvolumenstrom oder ein vom Ventilator erzeugter Konstantvolumenstrom mit pulsend wechselnder Temperatur versehen wird.

6. Verfahren nach einem der vorhergehenden Ansprüche, **dadurch gekennzeichnet, dass** das Wechseln der Temperatur periodisch erfolgt.

7. Verfahren nach einem der vorhergehenden Ansprüche, **dadurch gekennzeichnet, dass** zumindest ein Anteil des Gesamtvolumenstroms oder zumindest ein Anteil des Konstantvolumenstroms zeitweise über und zeitweise nicht über eine vom Wärmetauscher (13) gebildete Wärmequelle oder Kältequelle geleitet wird.

8. Verfahren nach einen der vorhergehenden Ansprüche, **dadurch gekennzeichnet, dass** als Querschnittsstellmittel (6) eine in einem den Wärmetauscher (13) aufweisenden Teilquerschnitt (10) liegende Schwenkklappe (12) verwendet wird, die für die Erzeugung der Luft mit pulsend wechselnder Temperatur ständig wechselnd geöffnet und geschlossen wird.

9. Verfahren nach einem der vorhergehenden Ansprüche, **dadurch gekennzeichnet, dass** die Frequenz der durch die Volumenstrompulse (V_{I}) bewirkte Volumenstromänderung und die Frequenz des Lufttemperaturwechsels unterschiedlich oder gleich und/oder synchron oder asynchron ist.

10. Vorrichtung zur Belüftung und/oder Klimatisierung eines Raumes, insbesondere eines Gebäudes, vorzugsweise zur Durchführung des Verfahrens nach einem oder mehreren der vorhergehenden Ansprüche 1 bis 9, mit einem einzigen Ventilator zur Erzeugung eines in den Raum einzubringenden Volumenstroms, **gekennzeichnet durch** eine Drehzahlstell- oder Drehzahlregeleinrichtung des Ventilators (3) und/oder ein einziges, dem Ventilator (3) strömungstechnisch vor- oder nachgeschaltetes Querschnittsstellmittel (6) zum Erzeugen eines permanenten, in der Größe konstanten Grundvolumenstroms (G) mit zeitbeabstandet überlagerten Volumenstrompulsen (V_{I}) eines Pulsvolumenstroms (P) und/oder unter Zuhilfenahme mindestends eines Wärmetauschers (13) zum Einbringen von Luft mit pulsend wechselnder Temperatur.
